# EUROPEAN PATENT APPLICATION

(11) **EP 2 110 504 A1**
(43) Date of publication of application: **21.10.2009**
(21) Application number: 08154627.7
(22) Date of filing: 16.04.2008
(51) Int. Cl.: E05D 15/16, F16C 13/00

(54) **Combined mechanism of pulley and wheel shaft**

(71) Applicant: Pro-Hawk Corporation, Taipei County, Sinjhuang City (TW)
(72) Inventor: Chen, Po-Feng, Sinjhuang City (TW)
(74) Representative: Viering, Jentschura & Partner

(57) **Abstract**

The combined mechanism of pulley and wheel shaft has a pulley (1) provided with dust and moisture proof means at both surfaces thereof that contributes to smooth operation of the mechanism with prolonged lifespan. The hollow structure of the wheel shaft (4) results in saving the material and fabrication cost. The wheel shaft (4) is successfully divided into a pivot section (42) and an axle section (43) with the aid of dexterously designed collar (41) necking the shaft at its front end and a ferrule (5) holding the pulley (1) which is hinged to the riveted tip of the pivot section (42). The collar (41) and the ferrule (5) makes the mechanism universally applicable to sectionalized lift up door for various occasions such as garage or vehicle door without the need of preparing different sized wheel shaft to meet individual cases.

## Description

### BACKGROUND OF THE INVENTION

### 1. Field of the invention

The present invention relates to a combined mechanism of pulley and wheel shaft, and more particularly, a combined mechanism of pulley and wheel shaft in which a hollowed wheel shaft and a dust and moisture proof pulley are used to curtail the fabrication cost.

### 2. Description of the Prior Art

Combined mechanism of pulley and wheel shaft is a simplest machine yet it is widely applicable to a garage or vehicle lift up door and a workshop conveyer or the like. Take the garage lift up door for example, it is a combined mechanism of pulley and wheel shaft installed on the garage door to lift the door panels up to the upper part of the door opening.

It has been an annoying experience that most of conventional garage lift up doors allow intrusion of dust, foreign materials and moisture into the pulley bearing after long time use, as a result, the accumulation of dust or the like obstructs the smooth operation of the mechanism. In addition the conventional solid metal shaft will greatly increase the cost of the fabrication as the inflation of metal price is getting worse and worse. Moreover, random specifications of the mechanism to meet the requirent of individual users further aggravates the cost up of fabrication as a new mold has to be prepared each time for a particular order.

For this defects noticeable on the prior art, an improvement is seriously required.

The inventor has dedicated great efforts for years to studying and improving these defects and coming up with a novel combined mechanism of pulley and rotating shaft as provided in this invention to eliminate the defects mentioned above.

### SUMMARY OF THE INVENTION

Accordingly, it is an object of the present invention to provide a combined mechanism of pulley and wheel shaft in which sealing means for dust and moisture are provided respectively at the front and rear sides of the pulley so as to enable the mechanism to operate smoothly during its prolonged lifespan.

It is another object of the present invention to provide a combined mechanism of pulley and wheel shaft in which the wheel shaft is made hollow so as to save the consumption of the metallic material thereby curtailing the fabrication cost.

It is one more object of the present invention to provide a combined mechanism of pulley and wheel shaft in which different sized ferrules can be provided at the front portion of the wheel shaft so as to be adaptable with a generally constructed shaft without the need of individually fabricating a special one to meet the particular requirement asking for a new mold.

To achieve these and other objects mentioned above, the mechanism of the present invention comprises a pulley with a dust cap and a dust washer, and a wheel shaft with a collar and a ferrule. The dust cap is to be covered on an annular detent groove formed around the front surface of the pulley, while a dust washer is used to seal an annular slot formed around the rear surface of the pulley so as to avoid intrusion of dust, moisture and foreign materials or the like into the pulley bearing which is provided at the center portion of the pulley to support the wheel shaft. The wheel shaft is made hollow and necked with the collar at a proper position near its front end. The wheel shaft is divided into a pivot section and an axle section. The ferrule, which being adapted to the pivot section, is detained by the collar. The ferrule can be formed into a variety of sizes to meet a wide requirement. The pivot section of the wheel shaft passes through the center of the pulley and rests on the bearing, and the pulley is held by the ferrule. Finally the pulley is hinged to the riveted tip of the pivot section of the wheel shaft.

With this structure, dust, foreign materials, moisture or the like can be prevented from intruding into the bearing of the pulley by the dust cap and the dust washer of the pulley so that the mechanism is able to keep smooth operation, and the hollowed wheel shaft contributes to minimizing the fabrication cost, and the provision of the collar and the ferrule for the wheel shaft makes the mechanism of the present invention universally applicable.

Other features and advantages of the present invention will be fully understood and appreciated from the following detailed description of the preferred embodiment with reference to the accompanied drawings.

### BRIEF DESCRIPTION OF THE DRAWINGS

Fig. 1 is an exploded view of the present invention.
Fig. 1A is a perspective view of the pulley viewed from the rear side according to the present invention.
Fig. 2 is a schematic view showing assembled structure of the pulley and the wheel shaft according to the present invention.
Figs. 3A, B are illustrative views showing application of the mechanism of the present invention to operate a garage door.

### DETAILED DESCRIPTION OF THE PREFERRED EMBODIMENT

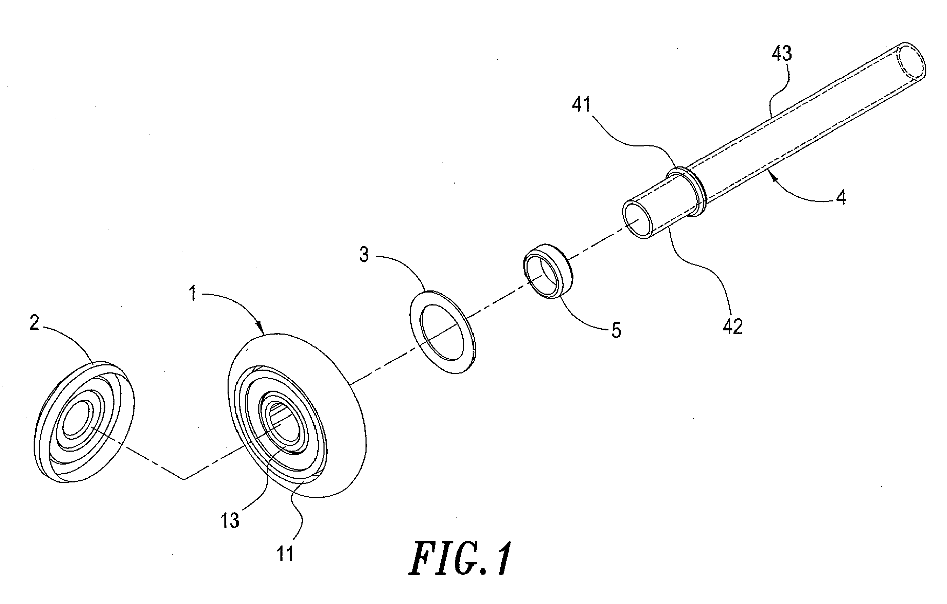

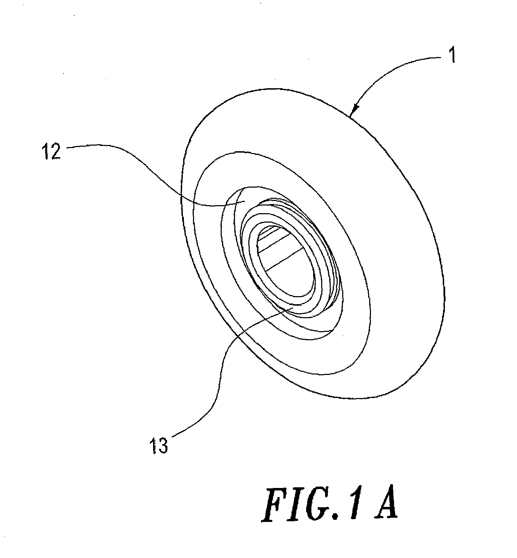

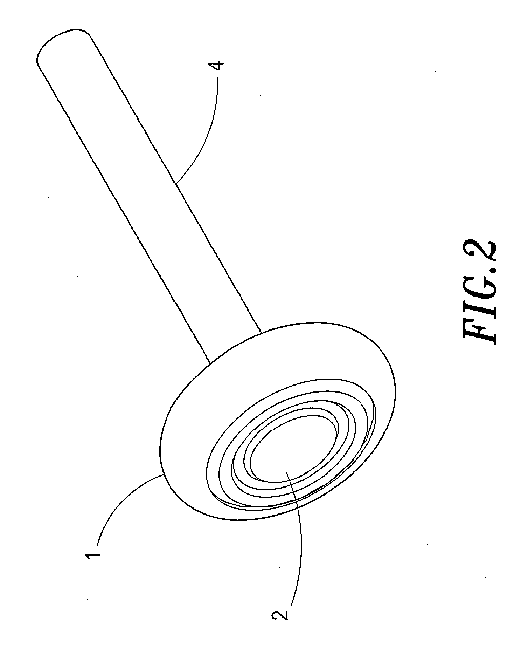

Referring to Figs. 1 and 2, the combined mechanism of pulley and wheel shaft according to the present invention is essentially a combination of a pulley 1 and a wheel shaft 4.

The pulley 1 has a dust cap 2 covered on an annular detent groove 11 formed around the front surface of the pulley 1, and a dust washer 3 to seal an annular slot 12 formed around the rear surface of the pulley 1 (see Fig. 1A). A bearing 13 is provided at the center portion of the pulley 1.

The wheel shaft 4, which is a hollow tubular body, is necked with a collar 41 at a proper position near its front end dividing the wheel shaft 4 into a front pivot section 42 and a rear axle section 43. An ferrule 5, which being adapted to the pivot section 42, is detained by the collar 41. The ferrule 5 can be formed into a variety of sizes to meet a wide requirement. The ferrule 5 can be made of plastic or metallic materials.

The wheel shaft 4 is supported by the bearing 13 of the pulley 1 at the front pivot section 42 of the wheel shaft 4 such that the pulley 1 is held by the ferrule 5. Finally the pulley 1 is hinged to the riveted tip of the pivot section 42 of the wheel shaft 4 so as to complete assembly of the combined mechanism of pulley and wheel shaft with dust and moisture free structure. The wheel shaft 4 may be directly molded in one piece into a hollow tube, or formed into an elongated flat plate with a flange, and then coiled up to become a tubular structure by rolling mill process.

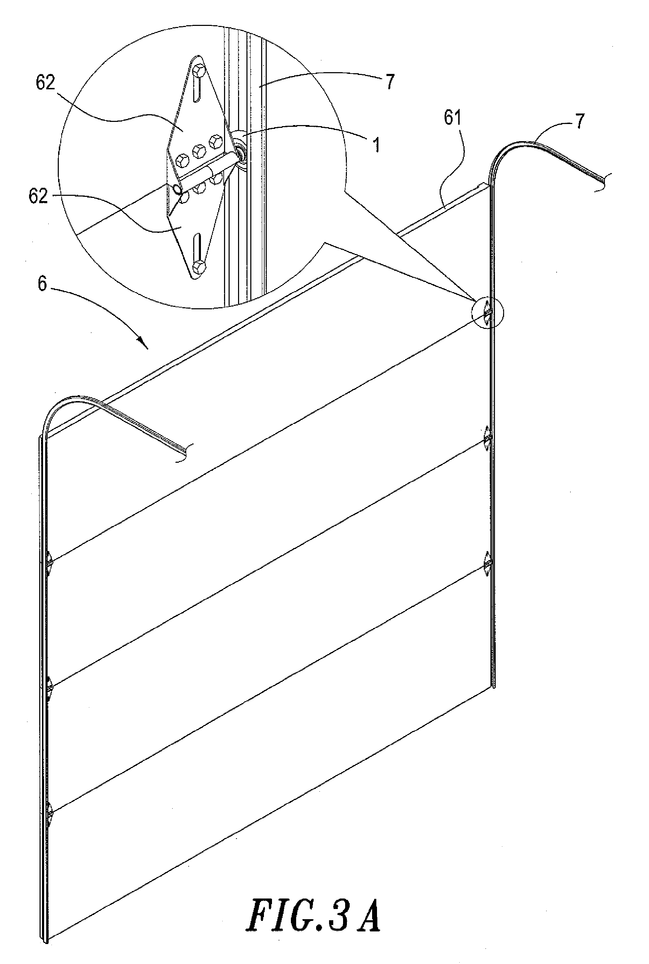

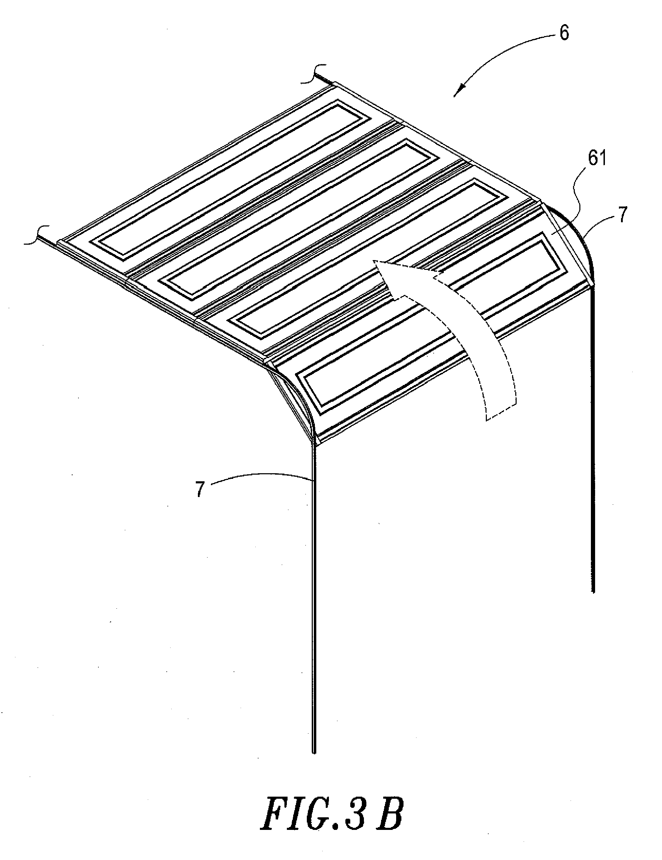

Referring to Figs. 3A and 3B, wherein the mechanism of the present invention is applied to operate a garage door, of course It can be applied to lift up any vehicle's door or the belt conveyer in the workshop or the like.

In this embodiment, take a garage lift up door 6 for example, the door 6 is formed of several straps of door panels 61 connected one after another, and a vertical slide rail 7 is stretched from the ground up into the ceiling along each door pillar at both sides of the garage door 6. There is installed a hinged casing 62 at both sides of each door panel 61 to support the wheel shaft 4 therebetween and the front end of the shaft 4 is fixed to the hinged casing 62, whereas the pulley 1 is accommodated in the slide rail 7. When the door 6 is to be opened, each door panel 61 is pulled backwards by applied force which actuates the pulley 1 to roll up with the door panel 61 along the slide rail 7 until all the door panels 61 are lifted to the ceiling.

It emerges from the description of the above example that the invention has several noteworthy advantages, in particular:

1.The dust cap and dust washer provided for the pulley contribute to keeping the pulley always clean and working smoothly with prolonged lifespan.

2.The hollow structure of the wheel shaft leads to saving material and minimizing fabrication cost.

3.Provision of various sizes of ferrules contributes to unifying the specification of the individual wheel shafts.

4.The mechanism of the present invention is simple in structure, easily operable and fabricative with low cost.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. A combined mechanism of pulley and wheel shaft, comprising:
a pulley 1 with a bearing 13 provided at the center thereof;
a wheel shaft 4 of hollow tubular structure necked with a collar 41 at a proper position near the front end thereof dividing said wheel shaft 4 into a front pivot section 42 and a rear axle section 43, wherein an ferrule 5, which, being adapted to said pivot section 42, is detained by said collar 41; wherein
said wheel shaft 4 is supported by said bearing 13 of the pulley 1 at said front pivot section 42 of the wheel shaft 4 such that said pulley 1 is held by said ferrule 5, and said pulley 1 is hinged to the riveted tip of said pivot section 42 of said wheel shaft 4.

2. The combined mechanism of claim 1, wherein said ferrule 5 is made of plastic.

3. The combined mechanism of claim 1, wherein said ferrule 5 is made of metal.

4. The combined mechanism of claim 1, wherein said wheel shaft 4 is made in one piece into a hollow tube with a mold.

5. The combined mechanism of claim 1, wherein said wheel shaft 4 is coiled into a tubular structure after being formed into an elongated flat plate.

6. A combined mechanism of pulley and wheel shaft, comprising:
a pulley 1 with a dust cap 2 at the front side thereof, and provided with a dust washer 3 at the rear side thereof, a bearing 13 being provided at the center thereof; a wheel shaft 4 of hollow tubular structure necked with a collar 41 at a proper position near the front end thereof dividing said wheel shaft 4 into a front pivot section 42 and a rear axle section 43, wherein a ferrule 5, which being adapted to said pivot section 42, is detained by said color 41; wherein,
said wheel shaft 4 is supported by said bearing 13 of the pulley 1 at said front pivot section 42 of the wheel shaft 4 such that said pulley 1 is held by said ferrule 5, and said pulley 1 is hinged to the riveted tip of said pivot section 42 said wheel shaft 4.

7. The combined mechanism of claim 6, wherein said pulley 1 has an annular detent groove 11 formed around the rear surface thereof for insertion of said dust washer 3 to seal the rear surface of said pulley 1.

8. The combined mechanism of claim 6, wherein said pulley 1 has an annular slot 12 formed around the rear surface thereof for insertion of said dust washer 3 to seal the rear surface of said pulley 1.

9. The combined mechanism of claim 6, wherein said ferrule 5 is made of plastic.

10. The combined mechanism of claim 6, wherein said ferrule 5 is made of metal.

11. The combined mechanism of claim 6 wherein said wheel shaft 4 is made in one piece into a hollow tube with a mold.

12. The combined mechanism of claim 6, wherein said wheel shaft 4 is coiled into a tubular structure after being formed into an elongated flat plate.
